# EUROPEAN PATENT APPLICATION

(11) **EP 4 528 464 A1**
(43) Date of publication of application: **26.03.2025**
(21) Application number: 23823074.2
(22) Date of filing: 12.06.2023
(51) Int. Cl.: G06F 3/04883

(54) **OPERATION METHOD FOR SCREENS IN VEHICLE SEAT CABIN, AND RELATED DEVICE**

(30) Priority: 13.06.2022 CN 202210662846
(71) Applicant: Huawei Technologies Co., Ltd., Shenzhen, Guangdong 518129 (CN)
(72) Inventor: ZHENG, Jiangzhen, Shenzhen, Guangdong 518129 (CN); WANG, Zongbo, Shenzhen, Guangdong 518129 (CN); JIANG, Shunji, Shenzhen, Guangdong 518129 (CN)
(74) Representative: Gill Jennings & Every LLP
(86) International application number: PCT/CN2023/099658
(87) International publication number: WO 2023/241506

(57) **Abstract**

Embodiments of this application disclose a vehicle cockpit screen operation method and a related device. The method includes: A head unit device obtains attribute information of an operation on a first screen in a plurality of screens in a cockpit; the head unit device determines a second screen from the plurality of screens based on the attribute information; and the head unit device displays a mirror interface of the second screen on the first screen. In embodiments of this application, when different screens in the cockpit need to be operated, only mirrors of the different screens need to be switched, and a user does not need to change a location of the user, thereby improving convenience of an operation on a screen in a vehicle cockpit. In addition, there is no need to add physical hardware to implement operations on the different screens in the cockpit. This can reduce hardware costs.

## Description

This application claims priority to Chinese Patent Application No. 202210662846.6, filed with the China National Intellectual Property Administration on June 13, 2022 and entitled "VEHICLE COCKPIT SCREEN OPERATION METHOD AND RELATED DEVICE", which is incorporated herein by reference in its entirety.

### TECHNICAL FIELD

This application relates to the field of intelligent vehicle technologies, and in particular, to a vehicle cockpit screen operation method and a related device.

### BACKGROUND

With the continuous development of vehicle research and development technologies, intelligent vehicle parc in each region is increasing. One of differences between an intelligent vehicle and an ordinary vehicle is that a plurality of screens are usually disposed on the intelligent vehicle, and some functions previously operated in a form of a physical button or the like are implemented through software operations on the screens. A central display screen is used as an example. A user may implement a function like vehicle control or entertainment audio and video control by interacting with the central display screen. However, the central display screen is usually disposed in the middle of the vehicle, and is located between a driver seat and a front passenger seat. Therefore, in most scenarios, the user in the driver seat or the front passenger seat may need to move slightly to perform a corresponding operation on the central display screen. However, a front passenger screen may be further disposed in a vehicle cockpit, and a rear left seat screen and a rear right seat screen are further disposed in a rear seat. In this case, the user needs to rise to operate these screens. Consequently, it is inconvenient to perform an operation on a screen in the vehicle cockpit.

### SUMMARY

Embodiments of this application provide a vehicle cockpit screen operation method and a related device, to help improve convenience of an operation on a screen in a vehicle cockpit.

According to a first aspect, an embodiment of this application provides a vehicle cockpit screen operation method, applied to a head unit device. The method includes:
obtaining attribute information of an operation on a first screen in a plurality of screens in a cockpit;
determining a second screen from a plurality of screens based on the attribute information; and
displaying a mirror interface of the second screen on the first screen.

In this embodiment of this application, the first screen may be any one of the plurality of screens. In some scenarios, the first screen may be a central display screen by default. The second screen may be any screen other than the first screen in the plurality of screens. The operation on the first screen may be an operation directly performed by a user on the first screen, or may be an operation performed by the head unit device on the first screen in response to an operation of a user on another mobile terminal, for example, controlling a cursor on the first screen to slide. The head unit device may parse and identify the operation on the first screen to obtain the attribute information of the operation. For example, the attribute information may be a start location, a sliding direction, and the like of the cursor. Based on the attribute information, the head unit device may determine, from the plurality of screens, the second screen that the user needs to operate, and then display the mirror interface of the second screen on the first screen. In view of this, the head unit device may perform an operation related to the second screen through the mirror interface, for example, when the cursor is in the mirror interface, the head unit device may implement a corresponding function on the second screen based on a user operation. In this way, when different screens in the cockpit need to be operated, only mirrors of the different screens need to be switched, and the user does not need to change a location of the user, thereby improving convenience of an operation on a screen in the vehicle cockpit. In addition, there is no need to add physical hardware to implement operations on the different screens in the cockpit. This can reduce hardware costs.

In some possible implementations, the operation on the first screen includes a sliding gesture operation, the attribute information includes a start location, an end location, and a sliding direction of a sliding gesture, and the determining a second screen from the plurality of screens based on the attribute information includes:
determining the second screen from the plurality of screens based on at least two of the start location, the end location, and the sliding direction.

In this embodiment of this application, the head unit device may determine, based on at least two of the start location, the end location, and the sliding direction of the sliding gesture operation, the second screen that the user needs to operate. For example, if the start location is the middle of the screen, the end location is the right edge of the screen, and the sliding direction is sliding from the middle of the screen to the right edge of the screen, it may be determined that a front passenger screen is a screen that the user needs to operate. In this case, the head unit device determines the front passenger screen as the second screen, to help subsequently display a mirror interface of the front passenger screen on the first screen, thereby facilitating execution of an operation related to the front passenger screen.

In some possible implementations, the operation on the first screen includes sliding of a cursor on the first screen, the attribute information includes an end location and a sliding direction of the cursor, and whether the cursor deforms, and the determining a second screen from the plurality of screens based on the attribute information includes:
determining the second screen from the plurality of screens based on at least two of the end location, the sliding direction, and whether the cursor deforms.

In this embodiment of this application, the sliding of the cursor on the first screen may be that the user directly controls the cursor to slide on the first screen, or may be that the head unit device drives the cursor on the first screen to slide in response to a slide operation of the user on a screen of another mobile terminal. In addition to the end location and the sliding direction of the cursor, the attribute information of the sliding of the cursor may further include whether the cursor deforms. For example, if a circular cursor slides to the right edge of the first screen, and the head unit device still receives a signal for controlling the cursor to slide to the right edge of the first screen, the head unit device deforms the cursor (for example, adjusts the cursor from a circle shape to an ellipse shape). The head unit device may determine, based on at least two of the end location, the sliding direction, and whether the cursor deforms, the second screen that the user needs to operate. For example, if the end location is the right edge of the screen, the sliding direction is sliding from the middle of the screen to the right edge of the screen, and the cursor deforms at the right edge of the screen, it may be determined that a front passenger screen is a screen that the user needs to operate. In this case, the head unit device determines the front passenger screen as the second screen, to help subsequently display the mirror interface of the front passenger screen on the first screen, thereby facilitating execution of an operation related to the front passenger screen.

In some possible implementations, after the displaying a mirror interface of the second screen on the first screen, the method further includes:
if the cursor is located in an area outside the mirror interface on the first screen, performing an operation related to the first screen;
if the cursor is located in the mirror interface, performing an operation related to the second screen; or
if the cursor is located on the second screen, performing an operation related to the second screen.

In this embodiment of this application, the head unit device may further determine an execution object of the user operation based on a location of the cursor. For example, if the cursor is located in the area outside the mirror interface on the first screen, it is determined that the user performs an operation on the first screen; or if the cursor is located in the mirror interface or the cursor is located on the second screen, it is determined that the user performs an operation on the second screen. After the execution object of the user operation is determined, the head unit device may implement a corresponding function on the execution object.

In some possible implementations, obtaining the sliding direction includes:
obtaining a component of a sliding distance in a horizontal direction and a component of the sliding distance in a vertical direction based on a line segment determined based on the start location and the end location; and
determining the sliding direction based on the component of the sliding distance in the horizontal direction, the component of the sliding distance in the vertical direction, and at least one of the start location and the end location.

In this embodiment of this application, regardless of the sliding gesture operation or the sliding of the cursor, the line segment may be determined based on the start location and the end location in the attribute information of the sliding gesture operation or the sliding of the cursor, and the component of the sliding distance in the horizontal direction and the component of the sliding distance in the vertical direction may be obtained through calculation based on the line segment. If the component of the sliding distance in the horizontal direction is greater than the component of the sliding distance in the vertical direction, it may be determined that the sliding direction is sliding in the horizontal direction, and then it may be determined that the final sliding direction is sliding rightward based on the sliding in the horizontal direction and the end location being the right edge of the first screen. If the component of the sliding distance in the vertical direction is greater than the component of the sliding distance in the horizontal direction, it may be determined that the sliding direction is sliding in the vertical direction, and then it may be determined that the final sliding direction is sliding from the lower right edge of the first screen to the middle of the screen based on the sliding in the vertical direction and the start location being the lower right edge of the first screen. The sliding direction is determined based on the component of the sliding distance in the horizontal direction, the component of the sliding distance in the vertical direction, and at least one of the start location and the end location, to help quickly determine the second screen.

In some possible implementations, before the obtaining attribute information of an operation on a first screen in a plurality of screens in a cockpit, the method further includes:
receiving an operation signal sent by a mobile terminal, where the operation signal is generated based on an operation of a user on a simulation touchpad on the mobile terminal, and the simulation touchpad includes a part or all of a screen of the mobile terminal; and
controlling, based on the operation signal, the cursor to slide on the first screen.

In this embodiment of this application, the screen of the mobile terminal is used as a simulation touchpad of the first screen through a connection between the mobile terminal and the head unit device. The mobile terminal generates a corresponding operation signal in response to an operation of the user on the simulation touchpad, and sends the operation signal to the head unit device. The head unit device may control, based on the operation signal, the cursor to slide on the first screen. The screen of the mobile terminal is used as the simulation touchpad of the first screen. Because the mobile terminal may be placed at any location in a vehicle, it is convenient for the user to perform an operation, and the operation on the first screen is driven by an operation on the simulation touchpad, so that the user does not need to rise to move to a place near the first screen to complete the operation, thereby improving operation convenience. In addition, as a popular device, the mobile terminal does not require additional hardware costs. In addition, in comparison with conventional four buttons through which one operation is completed by combining a plurality of actions, a manner of using the simulation touchpad in which an operation objective of the user is implemented by moving the cursor is a simpler operation manner.

In some possible implementations, the performing an operation related to the first screen includes:
taking a screenshot of the first screen in response to a first preset gesture operation of the user on the simulation touchpad; and/or
adjusting brightness of the first screen in response to a second preset gesture operation of the user on the simulation touchpad; and/or
displaying, in response to a third preset gesture operation of the user on the simulation touchpad, a first audio controller of a first speaker connected to the first screen, so that the user adjusts an audio attribute of the first speaker via the first audio controller.

In some possible implementations, the performing an operation related to the second screen includes:
taking a screenshot of the second screen in response to a first preset gesture operation of the user on the simulation touchpad; and/or
adjusting brightness of the second screen in response to a second preset gesture operation of the user on the simulation touchpad; and/or
displaying, in response to a third preset gesture operation of the user on the simulation touchpad, a second audio controller of a second speaker connected to the second screen, so that the user adjusts an audio attribute of the second speaker via the second audio controller.

In this embodiment of this application, the first preset gesture may be a shortcut gesture for taking a screenshot, the second preset gesture may be a shortcut gesture for adjusting brightness, and the third preset gesture may be a gesture for calling an audio adjustment control. When the user performs these preset gestures on the simulation touchpad, the head unit device may determine an execution object (for example, the first screen or the second screen) of these preset gestures based on the location of the cursor, and then implement, on the execution object, functions or commands corresponding to these preset gestures. For example, the user performs a shortcut gesture of knuckle knocking on the simulation touchpad, and the head unit device responds to the knuckle knocking. If the cursor is located in the mirror interface, it is considered that the second screen is the execution object, and the head unit device executes, on the second screen, a command corresponding to the shortcut gesture of knuckle knocking, for example, taking a screenshot. That is, according to different operations of the user on the simulation touchpad, the head unit device may implement, on different screens based on the location of the cursor, functions corresponding to the operations.

In some possible implementations, after the displaying a mirror interface of the second screen on the first screen, the method further includes:
locking the cursor in the mirror interface in response to sliding the cursor to the mirror interface.

In this embodiment of this application, when it is detected that the cursor slides to the mirror interface, the head unit device may directly lock the cursor in the mirror interface, or may lock the cursor in the mirror interface after receiving an operation of the user. The locking the cursor in the mirror interface helps prevent the cursor from being moved out of the mirror interface by mistake, and facilitates performing a related operation on the mirror interface through the cursor.

In some possible implementations, the determining the second screen from the plurality of screens based on at least two of the end location, the sliding direction, and whether the cursor deforms includes:
obtaining a pre-constructed spatial location graph of the plurality of screens, where the spatial location graph is used to represent a spatial location relationship between the plurality of screens; and
determining the second screen from the plurality of screens based on the spatial location relationship and at least two of the end location, the sliding direction, and whether the cursor deforms.

In this embodiment of this application, the head unit device stores a location of each screen in the plurality of screens, and constructs the spatial location graph of the plurality of screens based on the location of each screen. In other words, the spatial location graph can represent the spatial location relationship between the plurality of screens. The head unit device may determine, from the plurality of screens based on the spatial location relationship between the plurality of screens and at least two of the end location, the sliding direction, and whether the cursor deforms, the second screen that the user needs to operate.

In some possible implementations, the attribute information further includes stay duration of the cursor at the end location and lasting duration of deformation of the cursor in a case in which the cursor deforms, and after the determining a second screen from the plurality of screens based on the attribute information, the method further includes:
moving the cursor from the first screen to the second screen when the stay duration is greater than or equal to preset stay duration and/or the lasting duration is greater than or equal to preset lasting duration.

In this embodiment of this application, when the second screen is determined, the head unit device may move the cursor from the first screen to the second screen based on the stay duration of the cursor and/or the lasting duration of deformation of the cursor. For example, based on the spatial location relationship of the plurality of screens, the cursor on the central display screen is continuously moved rightward, and the cursor stays on the right edge of the central display screen for a time longer than the preset stay duration, so that the cursor may traverse the central display screen to the front passenger screen, to help the user drive, by performing an operation on the simulation touchpad, the cursor to perform a same operation on the second screen.

According to a second aspect, an embodiment of this application provides a vehicle cockpit screen operation apparatus, where the apparatus is used in a head unit device and includes an obtaining unit and a processing unit.

The obtaining unit is configured to obtain attribute information of an operation on a first screen in a plurality of screens in a cockpit.

The processing unit is configured to determine a second screen from the plurality of screens based on the attribute information.

The processing unit is further configured to display a mirror interface of the second screen on the first screen.

It should be noted that an apparatus corresponding to the first aspect is described in the second aspect, is configured to implement the embodiments of the method provided in the first aspect, and can achieve same or similar beneficial effects.

In some possible implementations, the operation on the first screen includes a sliding gesture operation, the attribute information includes a start location, an end location, and a sliding direction of a sliding gesture, and in an aspect of determining the second screen from the plurality of screens based on the attribute information, the processing unit is specifically configured to:
determine the second screen from the plurality of screens based on at least two of the start location, the end location, and the sliding direction.

In some possible implementations, the operation on the first screen includes sliding of a cursor on the first screen, the attribute information includes an end location and a sliding direction of the cursor, and whether the cursor deforms, and in an aspect of determining the second screen from the plurality of screens based on the attribute information, the processing unit is specifically configured to:
determine the second screen from the plurality of screens based on at least two of the end location, the sliding direction, and whether the cursor deforms.

In some possible implementations, the obtaining unit is further configured to:
if the cursor is located in an area outside the mirror interface on the first screen, perform an operation related to the first screen;
if the cursor is located in the mirror interface, perform an operation related to the second screen; or
if the cursor is located on the second screen, perform an operation related to the second screen.

In some possible implementations, the processing unit is further configured to:
receive an operation signal sent by a mobile terminal, where the operation signal is generated based on an operation of a user on a simulation touchpad on the mobile terminal, and the simulation touchpad includes a part or all of a screen of the mobile terminal; and
control, based on the operation signal, the cursor to slide on the first screen.

In some possible implementations, in an aspect of performing the operation related to the first screen, the processing unit is specifically configured to:
take a screenshot of the first screen in response to a first preset gesture operation of the user on the simulation touchpad; and/or
adjust brightness of the first screen in response to a second preset gesture operation of the user on the simulation touchpad; and/or
display, in response to a third preset gesture operation of the user on the simulation touchpad, a first audio controller of a first speaker connected to the first screen, so that the user adjusts an audio attribute of the first speaker via the first audio controller.

In some possible implementations, in an aspect of performing the operation related to the second screen, the processing unit is specifically configured to:
take a screenshot of the second screen in response to a first preset gesture operation of the user on the simulation touchpad; and/or
adjust brightness of the second screen in response to a second preset gesture operation of the user on the simulation touchpad; and/or
display, in response to a third preset gesture operation of the user on the simulation touchpad, a second audio controller of a second speaker connected to the second screen, so that the user adjusts an audio attribute of the second speaker via the second audio controller.

In some possible implementations, the processing unit is further configured to:
lock the cursor in the mirror interface in response to sliding the cursor to the mirror interface.

In some possible implementations, in an aspect of determining the second screen from the plurality of screens based on at least two of the end location, the sliding direction, and whether the cursor deforms, the processing unit is specifically configured to:
obtain a pre-constructed spatial location graph of the plurality of screens, where the spatial location graph is used to represent a spatial location relationship between the plurality of screens; and
determine the second screen from the plurality of screens based on the spatial location relationship and at least two of the end location, the sliding direction, and whether the cursor deforms.

In some possible implementations, the attribute information further includes stay duration of the cursor at the end location and lasting duration of deformation of the cursor in a case in which the cursor deforms, and the processing unit is further configured to:
move the cursor from the first screen to the second screen when the stay duration is greater than or equal to preset stay duration and/or the lasting duration is greater than or equal to preset lasting duration.

According to a third aspect, an embodiment of this application provides a head unit device, including a processor, a memory, and one or more programs. The processor is connected to the memory, the one or more programs are stored in the memory, and when the one or more programs are configured to be executed by the processor, the method in the first aspect is implemented.

According to a fourth aspect, an embodiment of this application provides a computer-readable storage medium. The computer-readable storage medium stores a computer program for execution by a device, and when the computer program is executed, the method in the first aspect is implemented.

According to a fifth aspect, an embodiment of this application provides a computer program product. When the computer program product is run on an electronic device, the electronic device is enabled to perform the method in the first aspect.

### BRIEF DESCRIPTION OF DRAWINGS

To describe the technical solutions in embodiments of the present invention or in the background more clearly, the following describes the accompanying drawings for describing embodiments of the present invention or the background.
FIG. 1 is a diagram of interaction with a central display screen by adding physical hardware according to a related technology;
FIG. 2 is a diagram of an application scenario of a vehicle cockpit screen operation method;
FIG. 3 is a schematic flowchart of a vehicle cockpit screen operation method according to an embodiment of this application;
FIG. 4 is a diagram of a location definition of each edge of a screen according to an embodiment of this application;
FIG. 5A is a diagram of determining a second screen based on a sliding direction and an end location according to an embodiment of this application;
FIG. 5B is a diagram of determining a second screen based on a sliding direction and a start location according to an embodiment of this application;
FIG. 6 is a diagram of a spatial location graph of screens in a cockpit according to an embodiment of this application;
FIG. 7A is a diagram of a mirror interface of a front passenger screen according to an embodiment of this application;
FIG. 7B is a diagram of performing a shortcut gesture on a front passenger screen via a simulation touchpad according to an embodiment of this application;
FIG. 7C is a diagram of performing a shortcut gesture on a central display screen via a simulation touchpad according to an embodiment of this application;
FIG. 8 is a diagram of moving a cursor to a front passenger screen according to an embodiment of this application;
FIG. 9A is a diagram of a central display screen and a dashboard screen that are present after a mobile terminal establishes a connection to a head unit device according to an embodiment of this application;
FIG. 9B is a diagram of controlling a cursor to deform according to an embodiment of this application;
FIG. 9C is a diagram of moving a cursor to a dashboard screen according to an embodiment of this application;
FIG. 9D is a diagram of driving, via a simulation touchpad, a cursor to operate a dashboard screen according to an embodiment of this application;
FIG. 10 is a schematic flowchart of another vehicle cockpit screen operation method according to an embodiment of this application;
FIG. 11 is a diagram of locations of a simulation touchpad and a cursor according to an embodiment of this application;
FIG. 12A is a diagram of a central display screen and a front passenger screen that are present after a mobile terminal establishes a connection to a head unit device according to an embodiment of this application;
FIG. 12B is another diagram of controlling a cursor to deform according to an embodiment of this application;
FIG. 12C is a diagram of mirroring a music playing interface of a front passenger screen onto a central display screen according to an embodiment of this application;
FIG. 12D is a diagram of operating a front passenger screen via a simulation touchpad according to an embodiment of this application;
FIG. 13 is a diagram of a structure of a vehicle cockpit screen operation apparatus according to an embodiment of this application; and
FIG. 14 is a diagram of a structure of a head unit device according to an embodiment of this application.

### DESCRIPTION OF EMBODIMENTS

In the specification, claims, and accompanying drawings of this application, the terms "first", "second", "third", "fourth", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification indicates that a particular feature, structure, or characteristic described with reference to this embodiment may be included in at least one embodiment of this application. The phrase shown in various locations in the specification may not necessarily mean a same embodiment, and is not an independent or optional embodiment exclusive from another embodiment. It is explicitly and implicitly understood by persons skilled in the art that embodiments described in the specification may be combined with another embodiment.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a terminal device and an application that runs on the terminal device may be components. One or more components may reside within a process and/or a thread of execution, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, a distributed system, and/or across a network such as the Internet interacting with other systems by using the signal).

To facilitate understanding of embodiments of this application, and further analyze and propose a technical problem to be specifically resolved in this application, the following briefly describes related technical solutions of this application.

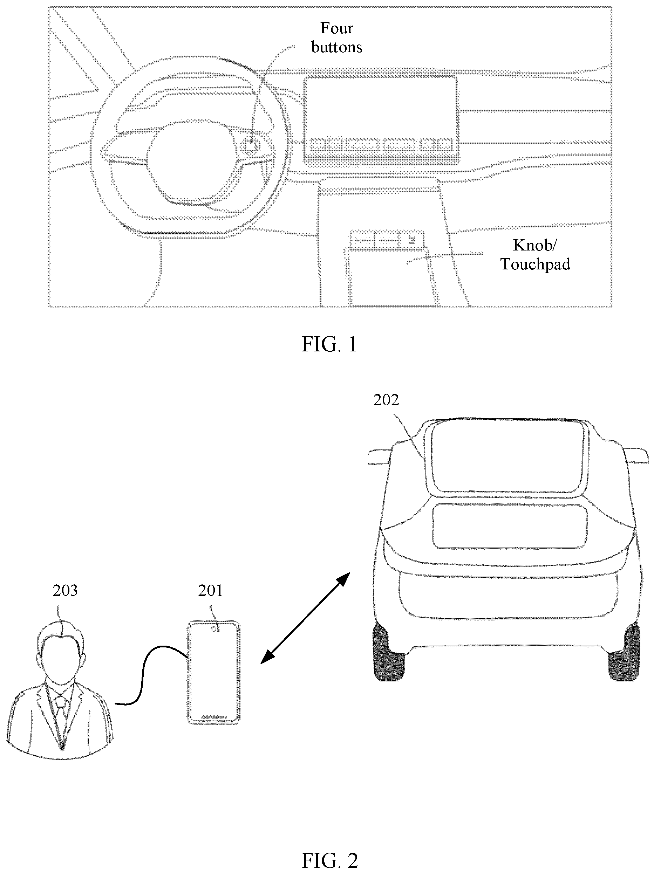

FIG. 1 shows a solution of implementing interaction with a central display screen by adding physical hardware according to a related technology. As shown in FIG. 1, in the related technology, four buttons are disposed on a steering wheel, a knob/touchpad is disposed between a driver seat and a front passenger seat, and the like. It should be understood that the four buttons are usually configured to operate the central display screen, and there are a plurality of screens in an intelligent vehicle/intelligent cockpit. It is difficult to operate a screen other than the central display screen via the four buttons. In addition, if the physical hardware is used to operate another screen, a location of the hardware is usually fixed. During actual operation, a user may need to rise to move to a place near the hardware. Consequently, operations are inconvenient, and hardware costs are increased.

Based on defects and disadvantages of the related technology, technical problems to be resolved in embodiments of this application are mainly as follows: An operation on an in-vehicle screen is implemented by using hardware fixed in a place in the cockpit, and as a result, costs are increased, operations are inconvenient, and when there are a plurality of screens, it is difficult to implement an operation on a screen other than a central display screen.

Based on the foregoing technical problems, embodiments of this application are mainly applied to a scenario in which a user interacts with a head unit device to operate a plurality of screens in a cockpit. FIG. 2 is a diagram of an application scenario of a vehicle cockpit screen operation method according to an embodiment of this application. As shown in FIG. 2, a mobile terminal 201, a head unit device 202, and a user 203 may be included in the scenario.

The mobile terminal 201 may be a portable device, for example, a mobile phone or a tablet computer, carried by the user 203. The mobile terminal 201 has a touchpad mode. In the touchpad mode, a screen of the mobile terminal 201 may be used as a simulation touchpad of a screen (for example, a central display screen) in the head unit device 202, so that the screen in the head unit device 202 is operated via the simulation touchpad.

At least two screens are disposed in the head unit device 202. The head unit device 202 and the mobile terminal 201 may establish a connection through Bluetooth, a wireless network, or the like. After the mobile terminal 201 enters the touchpad mode, a cursor may be displayed on the screen (for example, the central display screen) in the head unit device 202. The head unit device 202 may control the cursor to operate the screen in the head unit device 202 in response to an operation on the simulation touchpad on the mobile terminal 201.

The user 203 may be a vehicle owner or may be a passenger in a vehicle, and has a requirement of operating a plurality of screens. When the mobile terminal 201 and the head unit device 202 log in to different accounts, the user 203 may perform a manual operation to establish a connection between the mobile terminal 201 and the head unit device 202.

The following describes in detail, with reference to the accompanying drawings, a vehicle cockpit screen operation method and a related device provided in embodiments of this application.

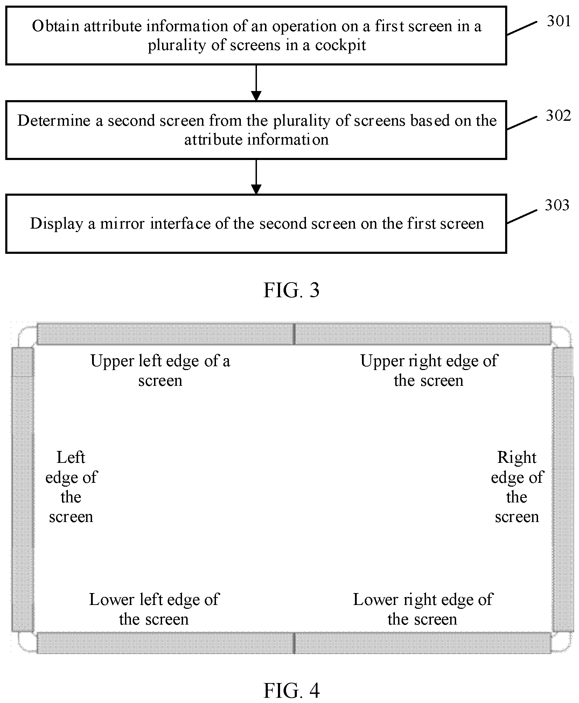

FIG. 3 is a schematic flowchart of a vehicle cockpit screen operation method according to an embodiment of this application. The method may be applied to the scenario shown in FIG. 2, and may be specifically performed by a head unit device. As shown in FIG. 3, the method may include steps 301 to 303.

301: Obtain attribute information of an operation on a first screen in a plurality of screens in a cockpit.

In this embodiment of this application, the first screen may be any one of the plurality of screens. In some scenarios, the first screen may be a central display screen by default. The second screen may be any screen other than the first screen in the plurality of screens. The operation on the first screen may be an operation directly performed by a user on the first screen, or may be an operation performed by the head unit device on the first screen in response to an operation of a user on another mobile terminal, for example, controlling a cursor on the first screen to slide. When an operation is performed on the first screen, the head unit device parses and identifies the operation to obtain the attribute information of the operation. For example, the operation may be a sliding gesture operation, and then the attribute information may include a start location, an end location, a sliding direction, stay duration at the start location, stay duration at the end location, and the like of a sliding gesture. For another example, the operation may be sliding of the cursor on the first screen, and the attribute information may include a start location, an end location, and a sliding direction of the cursor, whether the cursor deforms, stay duration of the cursor at the end location, lasting duration of deformation of the cursor, and the like. It should be understood that the operation on the first screen includes but is not limited to the sliding gesture operation and the sliding of the cursor, and may further include another screen operation manner.

302: Determine a second screen from the plurality of screens based on the attribute information.

In this embodiment of this application, corresponding to the sliding gesture operation, the determining a second screen from the plurality of screens based on the attribute information includes:
determining the second screen from the plurality of screens based on at least two of the start location, the end location, and the sliding direction, where it should be understood that, in addition to the first screen (for example, the central display screen), the plurality of screens further include a dashboard screen, a front passenger screen, a rear left seat screen, and a rear right seat screen; and mirroring conditions of the screens may be shown in Table 1.

**Table 1**

| Sliding direction | End location | Start location | Second screen |
|---|---|---|---|
| Slide leftward | Left edge of a screen | Middle of the screen | Dashboard screen |
| Slide rightward | Right edge of the screen | Middle of the screen | Front passenger screen |
| Slide to the lower left | Lower left edge of the screen | Middle of the screen | Rear left seat screen |
| Slide to the lower right | Lower right edge of the screen | Middle of the screen | Rear right seat screen |

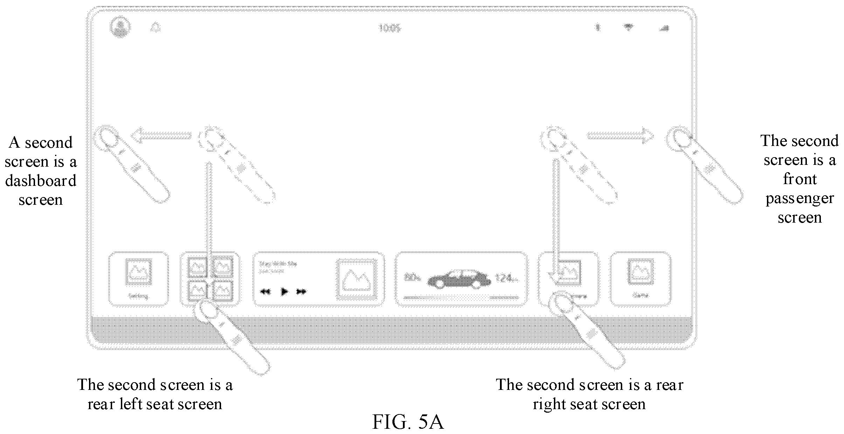

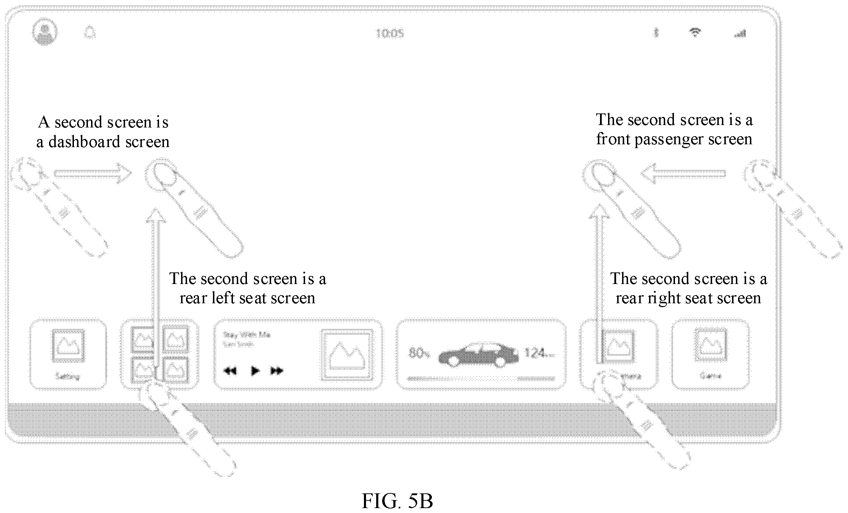

For definitions of the left edge of the screen, the right edge of the screen, the lower left edge of the screen, the lower right edge of the screen, the upper left edge of the screen, and the upper right edge of the screen in Table 1, refer to rectangular shadow areas in FIG. 4. For the upper left and upper right, and the lower left and the lower right, the middle line of the screen is used as a border. The head unit device may determine, based on at least two of the start location, the end location, and the sliding direction of the sliding gesture operation, the second screen that the user needs to operate. For example, if the start location is the middle of the screen, the end location is the right edge of the screen, and the sliding direction is sliding rightward, it may be determined that the second screen is the front passenger screen. FIG. 5A shows an example of determining the second screen based on the sliding direction and the end location. If the sliding direction is sliding leftward and the end location is the left edge of the screen, it may be determined that the second screen is the dashboard screen. If the sliding direction is sliding rightward and the end location is the right edge of the screen, it may be determined that the second screen is the front passenger screen. If the sliding direction is sliding to the lower left and the end location is the lower left edge of the screen, it may be determined that the second screen is the rear left seat screen. If the sliding direction is sliding to the lower right and the end location is the lower right edge of the screen, it may be determined that the second screen is the rear right seat screen. FIG. 5B shows an example of determining the second screen based on the sliding direction and the start location. If the sliding direction is sliding from the left edge of the screen to the middle of the screen, and the start location is the left edge of the screen, it may be determined that the second screen is the dashboard screen. If the sliding direction is sliding from the right edge of the screen to the middle of the screen, and the start location is the right edge of the screen, it may be determined that the second screen is the front passenger screen. If the sliding direction is sliding from the lower left edge of the screen to the middle of the screen, and the start location is the lower left edge of the screen, it may be determined that the second screen is the rear left seat screen. If the sliding direction is sliding from the lower right edge of the screen to the middle of the screen, and the start location is the lower right edge of the screen, it may be determined that the second screen is the rear right seat screen. It should be understood that FIG. 5A and FIG. 5B provide examples of determining the second screen based on two of the start location, the end location, and the sliding direction. The head unit device may further determine the second screen based on all of the start location, the end location, and the sliding direction.

In this embodiment of this application, corresponding to the sliding of the cursor, the determining a second screen from the plurality of screens based on the attribute information includes:
determining the second screen from the plurality of screens based on at least two of the end location, the sliding direction, and whether the cursor deforms, where it should be noted that the sliding of the cursor on the first screen may be that the user directly controls the cursor to slide on the first screen, or may be that the head unit device drives the cursor on the first screen to slide in response to a slide operation of the user on a screen of another mobile terminal; and in this scenario, mirroring conditions of a dashboard screen, a front passenger screen, a rear left seat screen, and a rear right seat screen may be shown in Table 2.

**Table 2**

| Sliding direction | End location | Whether the cursor deforms | Second screen |
|---|---|---|---|
| Move leftward | Left edge of a screen | Yes | Dashboard screen |
| Move rightward | Right edge of the screen | Yes | Front passenger screen |
| Move to the lower left | Lower left edge of the screen | Yes | Rear left seat screen |
| Move to the lower right | Lower right edge of the screen | Yes | Rear right seat screen |

That the cursor deforms may be that when the cursor slides to an edge of the first screen and continues to receive an instruction for sliding outward from the edge, the head unit device deforms the cursor. For example, the user continuously slides leftward on the simulation touchpad on the mobile terminal, and the head unit device receives a signal from the mobile terminal based on a connection to the mobile terminal, and slides the cursor leftward in response to the signal. When sliding the cursor to the left edge of the screen, the head unit device still receives a signal of sliding the cursor leftward, and then the head unit device changes a shape of the cursor. For example, the cursor is adjusted from a circle to an ellipse. As the lasting duration prolongs, the major axis of the ellipse increases, the minor axis decreases, and the cursor gradually changes from the ellipse to a bar. It should be understood that, in a scenario for the sliding of the cursor, for a manner of determining the second screen based on at least two of the end location, the sliding direction, and whether the cursor deforms, reference may be made to the sliding gesture operation. In this implementation, the head unit device determines the second screen from the plurality of screens based on the attribute information, to help subsequently display a mirror interface of the second screen on the first screen, for facilitating execution of an operation related to the second screen.

For example, the determining the second screen from the plurality of screens based on at least two of the end location, the sliding direction, and whether the cursor deforms includes:
obtaining a pre-constructed spatial location graph of the plurality of screens, where the spatial location graph is used to represent a spatial location relationship between the plurality of screens; and
determining the second screen from the plurality of screens based on the spatial location relationship and at least two of the end location, the sliding direction, and whether the cursor deforms.

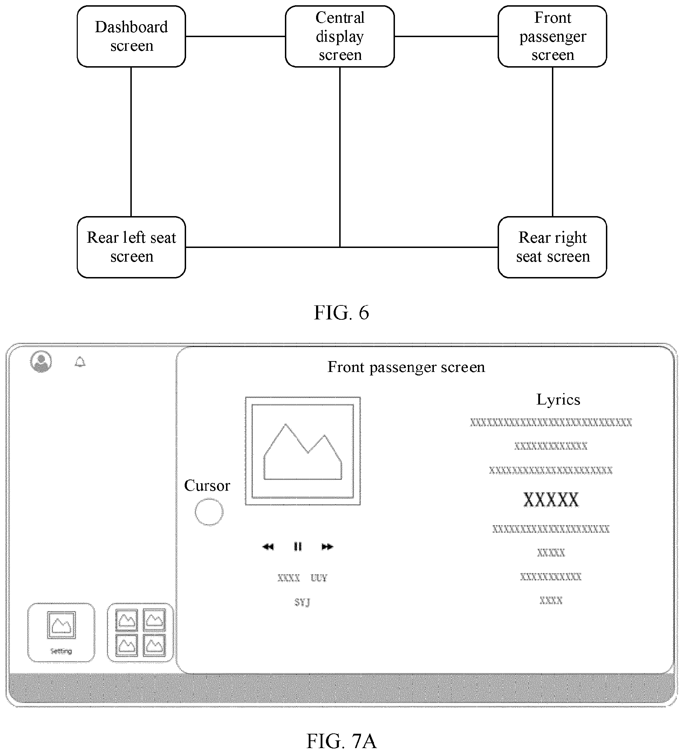

Specifically, the head unit device stores a location of each screen in the plurality of screens, and constructs the spatial location graph of the plurality of screens based on the location of each screen. In other words, the spatial location graph can represent the spatial location relationship between the plurality of screens. For example, a spatial location graph of the central display screen, the dashboard screen, the front passenger screen, the rear left seat screen, and the rear right seat screen may be shown in FIG. 6, and two adjacent screens are connected through a straight line. In the five screens shown in FIG. 6, because the central display screen is separated between the dashboard screen and the front passenger screen, the dashboard screen and the front passenger screen cannot be mutually determined as the second screen. To be specific, when the first screen is the dashboard screen, the front passenger screen cannot be determined as the second screen through a single operation; or when the first screen is the front passenger screen, the dashboard screen cannot be determined as the second screen through a single operation. However, two directly adjacent screens may be mutually determined as a to-be-operated or to-be-mirrored screen. The head unit device may determine, from the plurality of screens based on the spatial location relationship between the plurality of screens and at least two of the end location of the cursor, the sliding direction, and whether the cursor deforms, the second screen that the user needs to operate. In a possible example, based on the spatial location relationship between the plurality of screens, if the cursor slides toward a screen, stays at an edge close to the screen, and deforms, it may be determined that the screen is the second screen. For example, if the cursor currently is on the rear left seat screen (in this case, the rear left seat screen is the first screen), and the cursor moves upward, the cursor moves toward the dashboard screen in the spatial location graph of the screen. If the cursor stays at the upper edge and the cursor deforms, it may be determined that the second screen is the dashboard screen because the dashboard screen is located above the rear left seat screen.

Further, the spatial location relationship may represent a spacing distance between screens in the plurality of screens in each direction. For example, as shown in FIG. 6, a spacing distance between the central display screen and the dashboard screen in a horizontal right direction of the dashboard screen is 1, a spacing distance between the front passenger screen and the dashboard screen in a horizontal right direction of the dashboard screen is 2, a spacing between the front passenger screen and the rear right seat screen that is below the front passenger screen in a vertical direction of the front passenger screen is 1, and a spacing between the central display screen and the rear left seat screen in an upper right direction of the rear left seat screen is 1. The head unit device may further determine the second screen based on the spacing distance and at least two of the end location, the sliding direction, and whether the cursor deforms. For example, the spacing distance between the front passenger screen and the dashboard screen is 2. If it has been determined that the central display screen is the second screen based on attribute information corresponding to sliding the cursor rightward on the dashboard screen, but the cursor is still sliding rightward continuously, the head unit device may learn, based on the spacing distance represented by the spatial location graph, that a to-be-mirrored screen is not the central display screen but the front passenger screen, and then can display a mirror interface of the front passenger screen on the dashboard screen.

Further, if the first screen and the second screen are not the central display screen, switching between the plurality of screens needs to be transited by using the central display screen. To be specific, the first screen needs to be first switched to the central display screen, and then a mirror interface of another screen is displayed on the central display screen based on attribute information of an operation on the central display screen. For example, an operation on a simulation touchpad may be used to drive the cursor to slide, so as to switch the first screen to the central display screen. A specific switching rule may be shown in Table 3.

**Table 3**

| Screen on which a cursor is located | Sliding direction | End location | Whether the cursor deforms | Target screen |
|---|---|---|---|---|
| Dashboard screen | Slide rightward | Right edge of the screen | Yes | Central display screen |
| Front passenger screen | Slide leftward | Left edge of the screen | Yes | Central display screen |
| Rear left seat screen | Slide to the upper right | Upper right edge of the screen | Yes | Central display screen |
| Rear right seat screen | Slide to the upper left | Upper left edge of the screen | Yes | Central display screen |

For example, in Table 3, the screen on which the cursor is currently located is the dashboard screen. If the user needs to operate the rear left seat screen, the head unit device needs to: first move the cursor from the dashboard screen to the central display screen based on conditions (slide rightward, the right edge of the screen, and the cursor deforms) of switching the dashboard screen to the central display screen, and then display a mirror interface of the rear left seat screen on the central display screen based on attribute information of an operation of the cursor on the central display screen. In other words, the screen on which the cursor is located is transited from the dashboard screen to the central display screen, and an operation on another screen is implemented based on the central display screen.

For example, on the basis of identifying the start location and the end location, a step of obtaining the sliding direction may be:
obtaining a component of a sliding distance in a horizontal direction and a component of the sliding distance in a vertical direction based on a line segment determined based on the start location and the end location; and
determining the sliding direction based on the component of the sliding distance in the horizontal direction, the component of the sliding distance in the vertical direction, and at least one of the start location and the end location.

It should be understood that, because a gesture of the user cannot be standard horizontal sliding or vertical sliding, a sliding gesture operation or sliding of the cursor on the first screen is usually a curve. Therefore, a line segment may be determined based on a start location and an end location in attribute information of the operation, and a component of a sliding distance in a horizontal direction and a component of the sliding distance in a vertical direction may be obtained through calculation based on the line segment. If the component of the sliding distance in the horizontal direction is greater than the component of the sliding distance in the vertical direction, it may be determined that the sliding direction is sliding in the horizontal direction, and then it may be determined that the final sliding direction is sliding rightward based on the sliding in the horizontal direction and the end location being the right edge of the first screen. If the component of the sliding distance in the vertical direction is greater than the component of the sliding distance in the horizontal direction, it may be determined that the sliding direction is sliding in the vertical direction, and then it may be determined that the final sliding direction is sliding from the lower right edge of the first screen to the middle of the screen based on the sliding in the vertical direction and the start location being the lower right edge of the first screen. In this implementation, the sliding direction is determined based on the component of the sliding distance in the horizontal direction, the component of the sliding distance in the vertical direction, and at least one of the start location and the end location, to help quickly determine the second screen.

303: Display the mirror interface of the second screen on the first screen.

For example, a mirroring manner may be dual-channel transmission. To be specific, after a processor of the second screen calculates display data on the second screen, the head unit device controls the processor of the second screen to divide the display data into two channels for transmission, where one channel is still transmitted to the second screen for display, and the other channel is transmitted to the first screen for display. Alternatively, a mirroring manner may be projection. To be specific, the second screen sends display data to the second screen for display, and the head unit device controls a processor of the second screen to project an interface on the second screen onto the first screen for display. In this implementation, mirroring of the second screen onto the first screen is implemented in the manner of dual-channel transmission or projection, to help the user implement a related operation on the second screen through the mirror interface.

For example, the mirror interface may be displayed on the first screen in a floating window manner, or may be displayed in split screen. The floating window is to create a new mirror window on an original display interface layer of the first screen, for displaying the mirror interface, where the mirror window blocks a part of the first screen. In split screen, by adjusting a layout of a display interface of the first screen, a display area of an original display interface is reduced, and a part of a display region is vacant to display the mirror interface, that is, the mirror window and the original window of the first screen are displayed on a same interface layer.

For example, after the displaying the mirror interface of the second screen on the first screen, the method further includes:
locking the cursor in the mirror interface in response to sliding the cursor to the mirror interface, where in this implementation, when the head unit device detects that the cursor slides to the mirror interface, the head unit device may directly lock the cursor in the mirror interface, or may lock the cursor in the mirror interface after receiving an operation (for example, double tap) of the user; and the locking the cursor in the mirror interface helps prevent the cursor from being moved out of the mirror interface by mistake, and facilitates performing a related operation on the mirror interface through the cursor.

For example, the method further includes: detecting whether the cursor deforms on an edge of the mirror interface or whether a preset gesture exists on the mirror interface; and if yes, releasing the locking of the cursor in the mirror interface. For example, when the cursor is in the mirror window, a finger of the user slides on the simulation touchpad. When sliding to an edge of the mirror interface, the finger is blocked by the edge of the mirror window. When the user slides the cursor to the edge of the mirror interface and continuously slides outward, the cursor deforms, and the cursor slides out of the mirror interface and enters the first screen. The preset gesture may be, for example, an arc gesture.

For example, the method further includes:
if the cursor is located in an area outside the mirror interface on the first screen, performing an operation related to the first screen;
if the cursor is located in the mirror interface, performing an operation related to the second screen; or
if the cursor is located on the second screen, performing an operation related to the second screen.

For example, the performing an operation related to the first screen includes:
taking a screenshot of the first screen in response to a first preset gesture operation of the user on the simulation touchpad; and/or
adjusting brightness of the first screen in response to a second preset gesture operation of the user on the simulation touchpad; and/or
displaying, in response to a third preset gesture operation of the user on the simulation touchpad, a first audio controller of a first speaker connected to the first screen, so that the user adjusts an audio attribute of the first speaker via the first audio controller.

For example, the performing an operation related to the second screen includes:
taking a screenshot of the second screen in response to a first preset gesture operation of the user on the simulation touchpad; and/or
adjusting brightness of the second screen in response to a second preset gesture operation of the user on the simulation touchpad; and/or
displaying, in response to a third preset gesture operation of the user on the simulation touchpad, a second audio controller of a second speaker connected to the second screen, so that the user adjusts an audio attribute of the second speaker via the second audio controller.

Specifically, FIG. 7A shows an example in which the second screen is the front passenger screen. When the user slides the cursor to an edge of the central display screen by using a rightward sliding gesture a plurality of times on a simulation touchpad, the user continues to slide, and the cursor on the central display screen deforms, it is determined that the second screen is the front passenger screen, and the front passenger screen is mirrored onto the central display screen and is displayed in a small window manner. In this case, the cursor is still in an area outside a mirror interface of the central display screen. The user may control, by performing operations on the simulation touchpad on the mobile terminal, the cursor to perform some actions on the central display screen, to move the cursor to the mirror interface of the front passenger screen. The head unit device may control, in response to an operation of the user on the simulation touchpad, the cursor to perform a same operation on the mirror interface, for example, performing a same operation of tapping, sliding or the like on a specific icon. Based on the operation on the mirror interface, the head unit device generates an operation instruction, and synchronizes the operation on the mirror interface to the front passenger screen, so that a page of the front passenger screen changes. After the page of the front passenger screen changes, changed content of the page is synchronized to the mirror interface. For example, in FIG. 7A, when the cursor moves to a music playing control, and in response to tapping of the user, the cursor taps a next song on the mirror interface of the front passenger screen. In this case, the head unit device responds to the operation of the cursor to play the next song in a playlist, the same operation is performed on the front passenger screen, and a music playing interface correspondingly changes, for example, the displayed album cover, lyrics, singer, song name, and the like all change correspondingly, and the change is synchronized to the mirror interface. In the embodiment shown in FIG. 7A, the front passenger screen may be further determined as the second screen by considering stay duration of the cursor at the end location and/or lasting duration of deformation. For example, the stay duration of the cursor at the end location and/or the lasting duration of deformation exceeds preset duration (for example, 3 seconds). In this implementation, the stay duration of the cursor at the end location and/or the lasting duration of deformation is used as a precondition for screen mirroring, so that an accidental touch operation can be reduced to some extent.

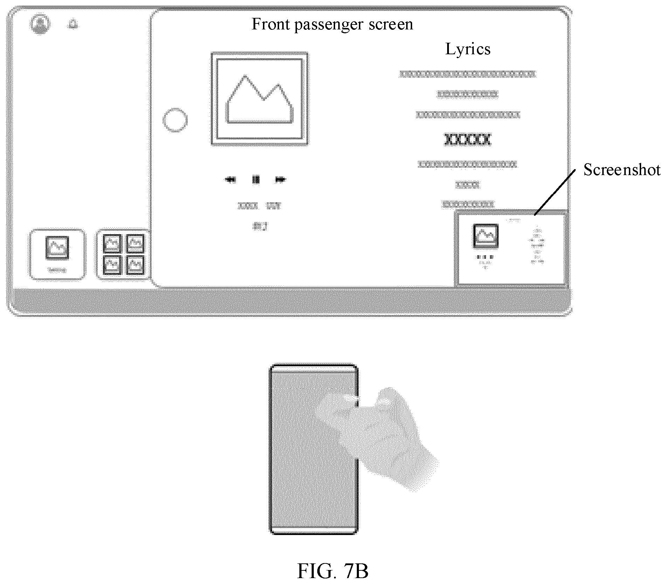

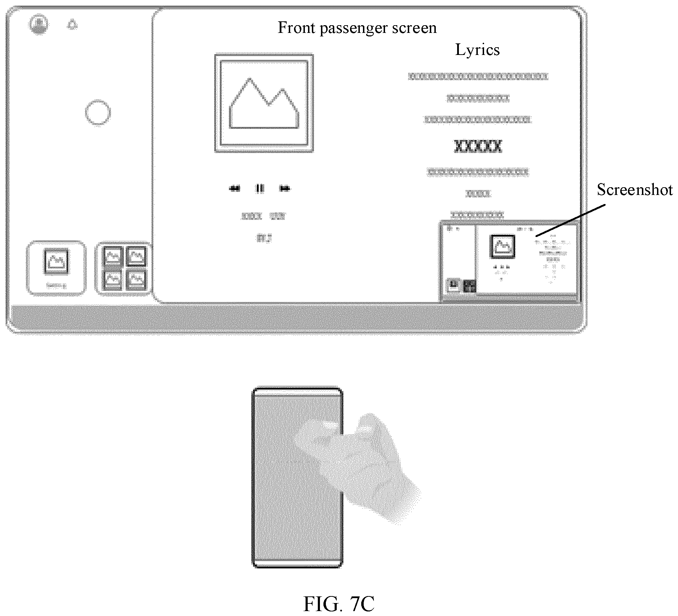

FIG. 7B shows another example in which the second screen is the front passenger screen. After an interface of the front passenger screen is mirrored onto the first screen, some shortcut gestures, for example, taking a screenshot by knocking with a knuckle, adjusting screen brightness by sliding with two fingers, and calling a volume adjustment control by touching and holding, may be used to control shortcut functions on the front passenger screen. For example, the first preset gesture may be a shortcut gesture for taking a screenshot (for example, taking a screenshot by knocking with a knuckle), the second preset gesture may be a shortcut gesture for adjusting brightness (for example, sliding with two fingers), and the third preset gesture may be a gesture for calling an audio adjustment control (for example, touching and holding). When the user performs the shortcut gesture of knuckle knocking on the simulation touchpad, the head unit device determines an execution object of the shortcut gesture based on a location of the cursor. For example, if the cursor is in the mirror interface, the shortcut gesture of knuckle knocking is determined as the operation on the front passenger screen. The head unit device executes a screenshot command on the front passenger screen, and synchronizes a screenshot interface on the front passenger screen to the mirror interface. For example, as shown in FIG. 7C, if the cursor is in the area outside the mirror interface on the central display screen, the shortcut gesture of knuckle knocking is determined as the operation on the central display screen, and the head unit device executes the screenshot command on the central display screen.

It should be understood that, if the user performs a dual-finger slide up gesture on the simulation touchpad, and if the cursor is in the mirror interface, the head unit device executes a brightness increase command corresponding to the dual-finger slide up gesture on the front passenger screen; or if the user performs a dual-finger slide up gesture on the simulation touchpad, and if the cursor is in the area outside the mirror interface on the central display screen, the head unit device executes a brightness increase command corresponding to the dual-finger slide up gesture on the central display screen. If the user performs a touch-and-hold gesture on the simulation touchpad, and the cursor is in the mirror interface, the head unit device executes, on the front passenger screen, an audio controller (an audio controller of a speaker of the front passenger screen) call command corresponding to the touch-and-hold gesture, to call the audio controller (a second audio controller) of the speaker (namely, a second speaker) connected to the front passenger screen, and the user may adjust an audio attribute of the second speaker via the second audio controller. Alternatively, if the user performs a touch-and-hold gesture on the simulation touchpad, and the cursor is in the area outside the mirror interface of the central display screen, the head unit device executes, on the central display screen, an audio controller (an audio controller of a speaker of the central display screen) call command corresponding to the touch-and-hold gesture, to call the audio controller (a first audio controller) of the speaker (namely, a first speaker) connected to the central display screen, and the user may adjust an audio attribute of the first speaker via the first audio controller. In view of this, the head unit device may adjust audio attributes of speakers connected to different screens, to adjust sound fields at different locations in the vehicle.

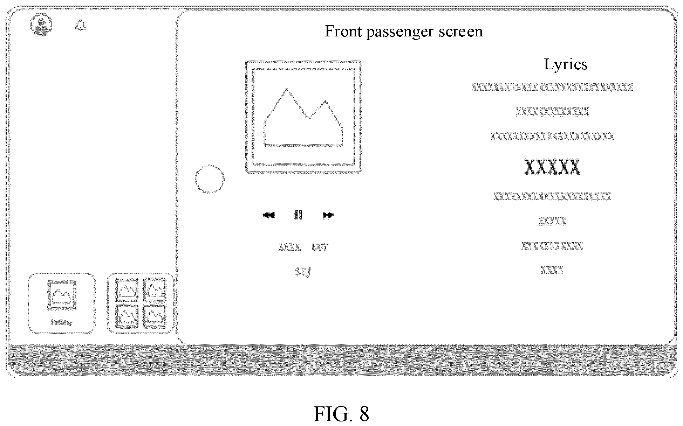

For example, after the determining a second screen from the plurality of screens based on the attribute information, the method further includes:
moving the cursor from the first screen to the second screen when the stay duration of the cursor at the end location is greater than or equal to preset stay duration and/or lasting duration of deformation of the cursor in a case in which the cursor deforms is greater than or equal to preset lasting duration, where when the second screen is determined, the head unit device may move the cursor from the first screen to the second screen; for example, based on the spatial location relationship of the plurality of screens, the cursor on the central display screen is continuously moved rightward, so that the cursor can traverse the central display screen to the front passenger screen, to help the user drive, by performing an operation on the simulation touchpad, the cursor to perform a same operation on the second screen; optionally, whether the cursor moves to the second screen may also be used as a condition for displaying the mirror interface of the second screen on the first screen; as shown in FIG. 8, based on step 302, it is determined that the front passenger screen is the second screen, and the stay duration of the cursor at the end location is greater than or equal to the preset stay duration and/or the lasting duration of deformation of the cursor in a case in which the cursor deforms is greater than or equal to the preset lasting duration; in this case, the head unit device may control (actively control or respond to the operation of the user on the simulation touchpad) the cursor to move to the front passenger screen; when the cursor appears on the front passenger screen, step 303 is performed for displaying the mirror interface of the front passenger screen on the central display screen; it should be noted that, in this embodiment, an actual location of the cursor is in the front passenger screen. FIG. 8 shows the mirror interface of the front passenger screen; and in this scenario, the cursor shown in FIG. 8 cannot be controlled to move out of the mirror interface.

For ease of understanding, the following provides an example of moving the cursor from the central display screen to the dashboard screen.

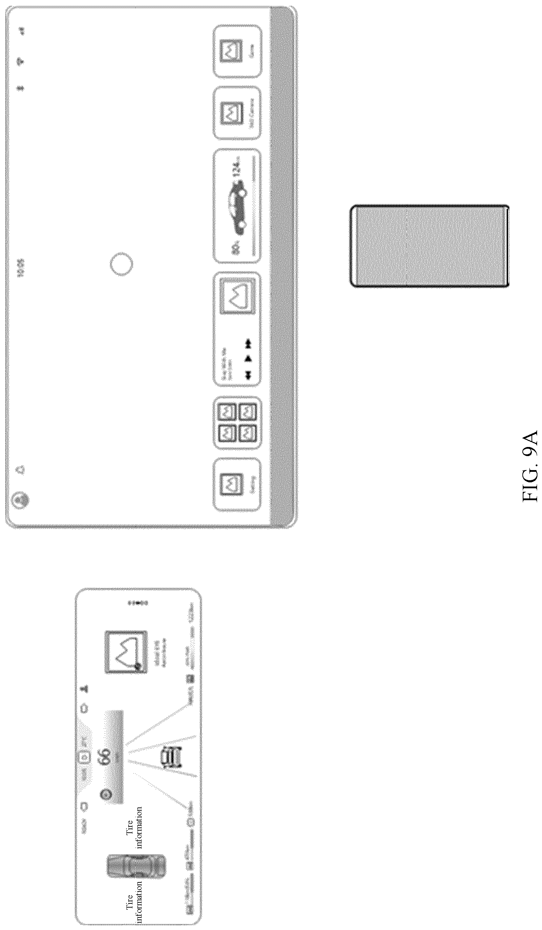

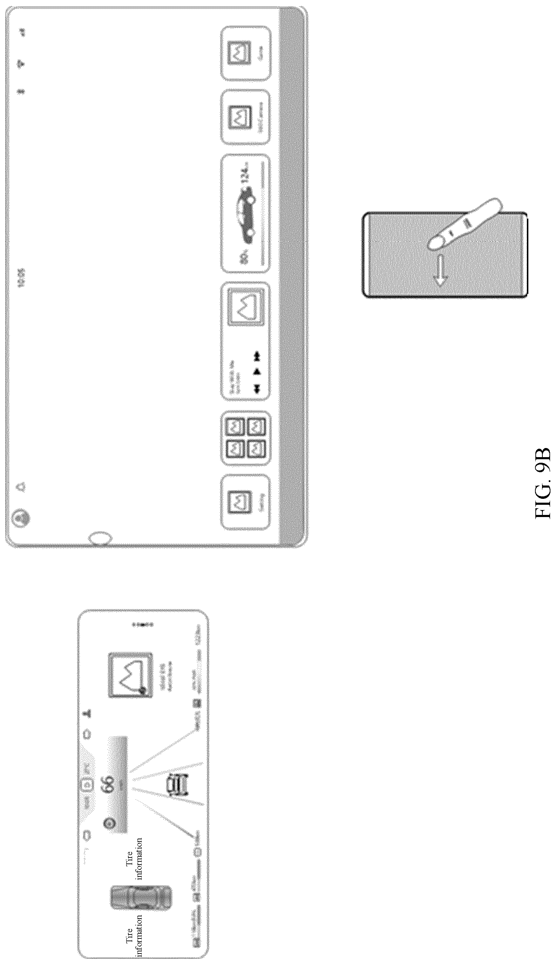

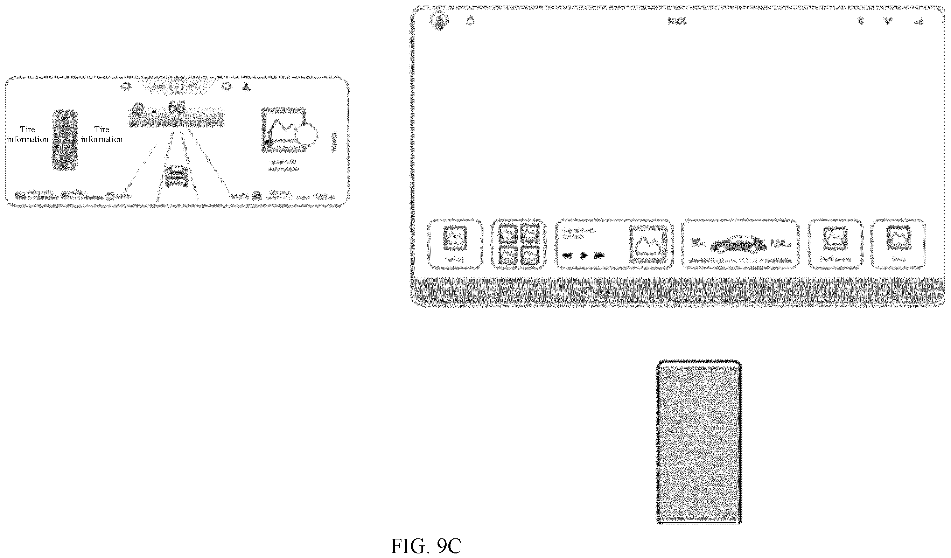

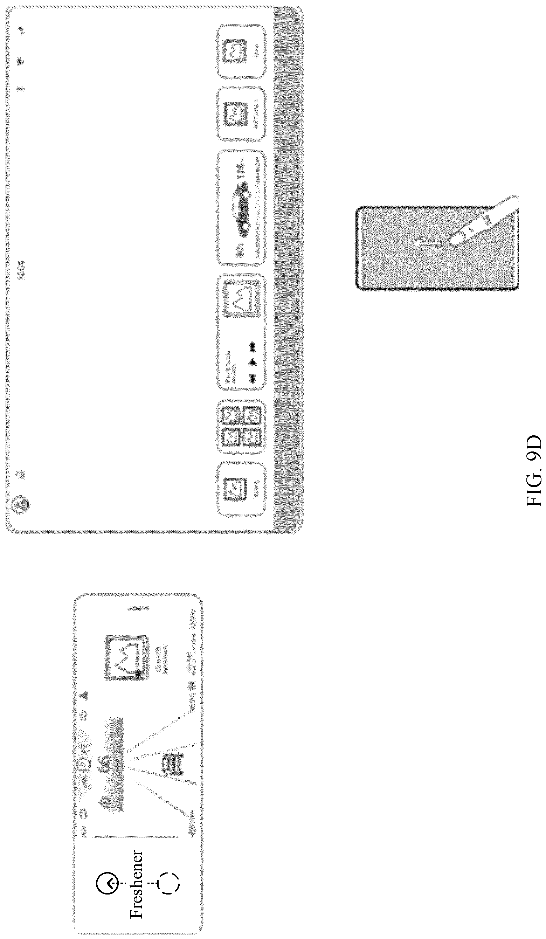

Refer to FIG. 9A. After a mobile terminal establishes a connection to a head unit device, the mobile terminal enters a touchpad mode, the mobile terminal displays a simulation touchpad, a cursor is displayed in the middle of a central display screen, and the cursor may be hidden after being displayed for 5 seconds. The dashboard screen displays various information of a vehicle, for example, vehicle tire information displayed on the left side. Refer to FIG. 9B. A user performs a left-slide gesture on the simulation touchpad, and the head unit device controls the cursor on the central display screen to slide leftward. The user continues sliding leftward on the simulation touchpad, and in this case, the cursor slides to the left edge of the screen. When the user performs a left-slide gesture on the simulation touchpad again, the head unit device responds to a signal of continuing to slide leftward, so that the cursor deforms. When the cursor deforms for more than 3 seconds, the cursor moves to the dashboard screen. Refer to FIG. 9C. After the cursor moves to the dashboard screen, the cursor no longer deforms and returns to a circle. Refer to FIG. 9D. After the cursor moves to the dashboard screen, the simulation touchpad is no longer used to control the central display screen, but is used to control the dashboard screen. For example, the cursor moves to the left side of the dashboard screen, and then a slide-up gesture is performed on the simulation touchpad. Vehicle information on the left side of the dashboard screen is switched from the tire information to a freshener control interface.

It can be learned that the head unit device may parse and identify the operation on the first screen to obtain the attribute information of the operation. For example, the attribute information may be a start location, a sliding direction, and the like of the cursor. Based on the attribute information, the head unit device may determine, from the plurality of screens, the second screen that the user needs to operate, and then display the mirror interface of the second screen on the first screen. In view of this, the head unit device may perform an operation related to the second screen through the mirror interface, for example, when the cursor is in the mirror interface, the head unit device may implement a corresponding function on the second screen based on a user operation. In this way, when different screens in the cockpit need to be operated, only mirrors of the different screens need to be switched, and the user does not need to change a location of the user, thereby improving convenience of an operation on a screen in the vehicle cockpit. In addition, there is no need to add physical hardware to implement operations on the different screens in the cockpit. This can reduce hardware costs.

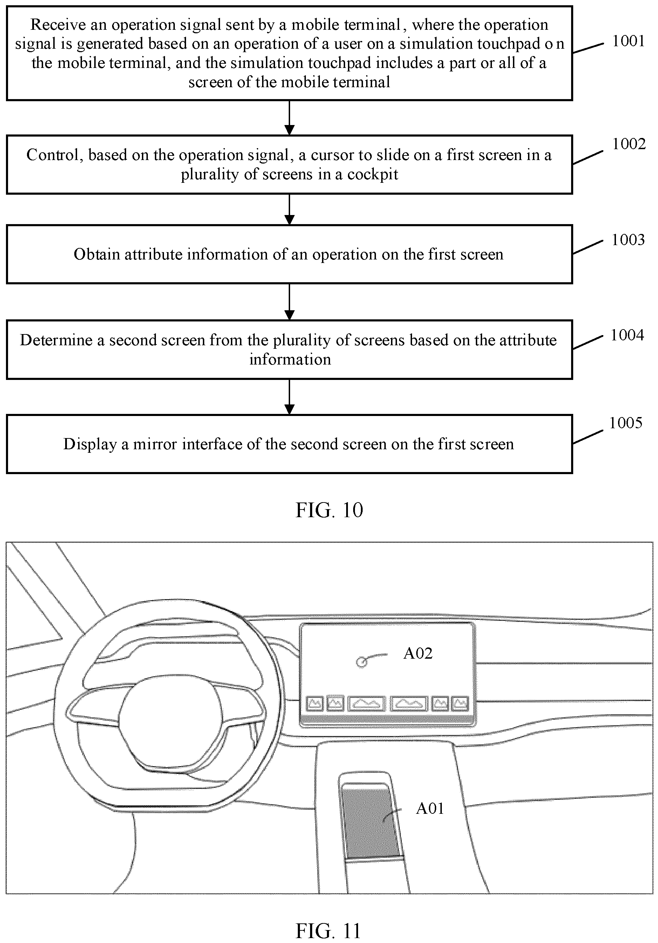

FIG. 10 is a schematic flowchart of another vehicle cockpit screen operation method according to an embodiment of this application. As shown in FIG. 10, the method may include steps 1001 to 1005.

1001: Receive an operation signal sent by a mobile terminal, where the operation signal is generated based on an operation of a user on a simulation touchpad on the mobile terminal, and the simulation touchpad includes a part or all of a screen of the mobile terminal.

1002: Control, based on the operation signal, a cursor to slide on a first screen in a plurality of screens in a cockpit.

1003: Obtain attribute information of an operation on the first screen.

1004: Determine a second screen from the plurality of screens based on the attribute information.

1005: Display a mirror interface of the second screen on the first screen.

In this embodiment of this application, when no connection is established between a head unit device and the mobile terminal, the head unit device and the mobile terminal may independently perform operations. The user performs an operation on the mobile terminal to implement a function of the mobile terminal, and performs an operation on the head unit device to implement a function of the head unit device. The operation on the head unit device may be implemented through a touchscreen or four navigation buttons on a steering wheel. The head unit device and the mobile terminal may establish a connection through Bluetooth, a wireless network, a universal serial bus, or the like. After the connection is established, the head unit device and the mobile terminal may perform household communication. In an example, the head unit device and the mobile terminal may be automatically connected. For example, the mobile terminal may automatically enable a driving mode when determining that the user enters the vehicle; and the head unit device and the mobile terminal automatically establish a connection when/after the driving mode is enabled. In another example, the head unit device and the mobile terminal may alternatively establish a connection through a manual operation of the user. For example, the mobile terminal searches for the head unit device, and establishes a connection after pairing. After the connection is established, the head unit device and the mobile terminal can still be independently operated by the user. If a screen in the head unit device needs to be operated via the mobile terminal, the mobile terminal needs to enter a touchpad mode. In the touchpad mode, a part or all of the screen of the mobile terminal is used as the simulation touchpad, and the user may perform operations such as tapping, sliding, and knuckle knocking on the simulation touchpad, to implement an operation on a head unit screen.

For example, the user may first operate the mobile terminal to enter the touchpad mode, and then connect the mobile terminal to the head unit device. For example, a placement groove is disposed in the cockpit, and a wireless charging module may be integrated into the placement groove to wirelessly charge the mobile terminal in the placement groove. The placement groove may further be integrated with a short-range communication module. When the mobile terminal is placed in the placement groove, the head unit device communicates with the mobile terminal through the short-range communication module. In an example, the head unit device may verify whether the head unit device and the mobile terminal have logged in to a same account. If yes, the mobile terminal directly triggers the touchpad mode, that is, the mobile terminal actively enters the touchpad mode. If the mobile terminal and the head unit device log in to different accounts, the user may enable the mobile terminal to enter the touchpad mode in a manual operation manner, for example, an operation on a menu in a "control center" or "setting items" or on a "physical button of a mobile phone". The head unit device and the mobile terminal may establish a connection at the same time when the mobile terminal enters the touchpad mode. For example, when the mobile phone is placed in a wireless charging groove, account verification is performed, and a connection is established at the same time.

FIG. 11 shows an example after a head unit device and a mobile terminal establish a connection. The mobile terminal is located in a placement groove, and automatically enters a touchpad mode. A shadow area in a screen of the mobile terminal is used as a simulation touchpad A01 of a first screen (connected to a central display screen by default). When the mobile terminal and the head unit device establish a connection, a cursor A02 is displayed on the central display screen, to prompt a user to perform an operation on the central display screen via the simulation touchpad. A location of the cursor may be the middle of the central display screen or a last location of the cursor after a previous operation. If the user does not perform any operation, the cursor is hidden after being displayed on the central display screen for a preset time (for example, 3 seconds). When the user performs a gesture operation on the simulation touchpad A01, the cursor is unhidden, and is displayed on the central display screen again. After the user stops the operation for the preset time, the cursor is hidden again. When an interval between two operations of the user is long, in response to another operation of the user on the simulation touchpad, the cursor returns to an initial location (for example, in the middle of the screen). Certainly, the cursor may still be displayed at a location after the previous operation. After the mobile terminal establishes a connection to the head unit device, the user may still operate a head unit screen via the simulation touchpad on the mobile terminal after taking the mobile terminal out of the placement groove. In other words, when the mobile terminal is connected to the head unit device, an operation on the head unit screen may be implemented at any location in a vehicle via the simulation touchpad, and the user does not need to move a location of the user to the current screen.

It should be noted that, for a specific implementation of steps 1003 to 1005, reference is made to the implementation of driving the cursor to slide via the simulation touchpad in the embodiment shown in FIG. 3, and a same or similar beneficial effect can be achieved. Details are not described herein again.

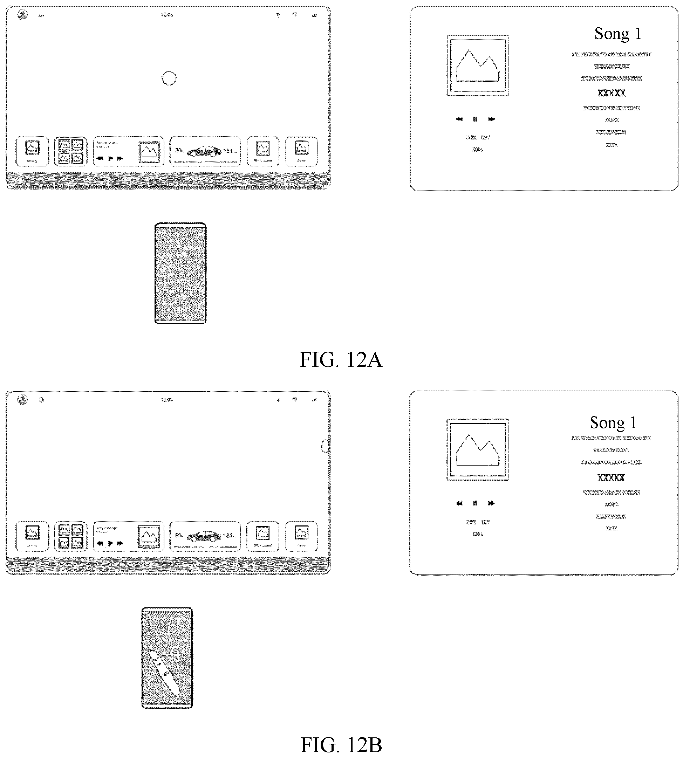

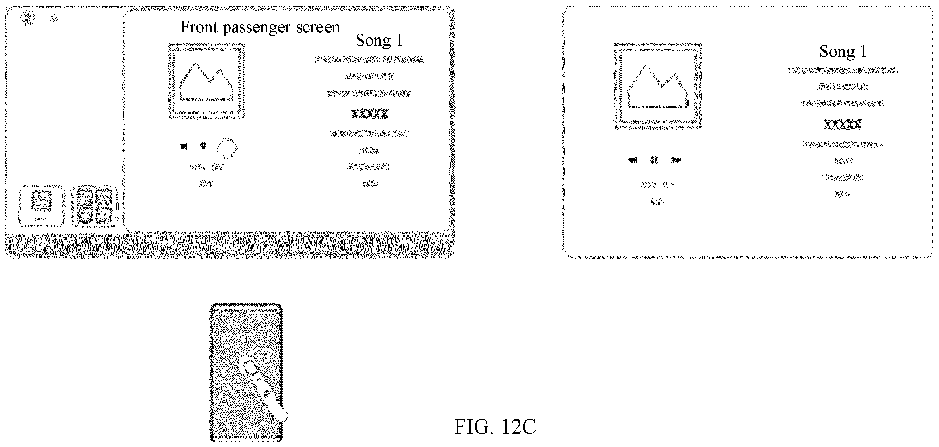

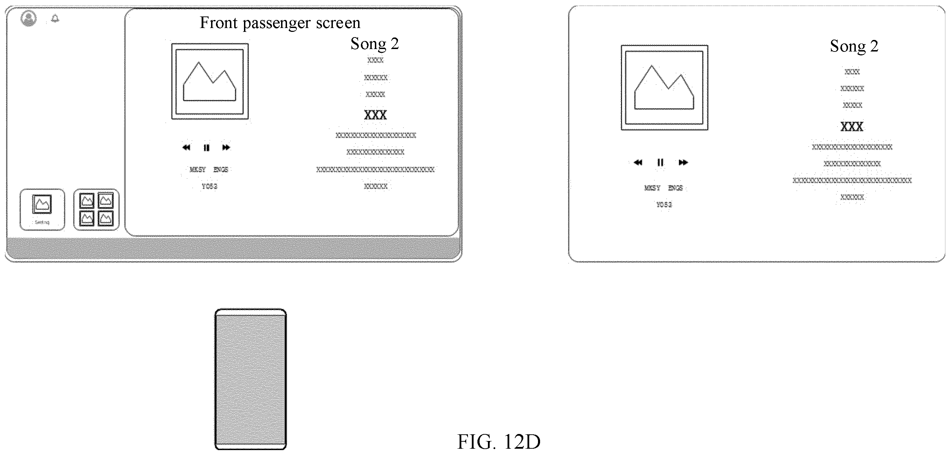

For ease of understanding, the following provides an example of mirroring a front passenger screen.
(1) A user places a mobile terminal into a placement groove, and a head unit device establishes a connection to the mobile terminal. The head unit device verifies, by interacting with the mobile terminal, whether the mobile terminal has logged in to a same account. If a result returned by the mobile terminal indicates that the mobile terminal has logged in to the same account, the head unit device sends a signal to the mobile terminal to instruct the mobile terminal to enter a touchpad mode, or the mobile terminal automatically enters the touchpad mode in response to an account verification result. After the mobile terminal enters the touchpad mode, as shown in FIG. 12A, a cursor is displayed on a central display screen. If no operation is performed, the cursor is hidden after being displayed for 5 seconds. In addition, the front passenger screen runs a music playing program in a normal manner, and displays related information such as lyrics of song 1.
(2) The user extends a finger into the placement groove, or picks up the mobile terminal from the placement groove, and performs a right-slide gesture on a simulation touchpad to drive the cursor on the central display screen to slide rightward. The user may continuously perform the right-slide gesture on the simulation touchpad a plurality of times (in theory, when a screen of a mobile phone is large enough, the user may also slide to an edge by sliding once, but usually a plurality of operations may be required), and slide the cursor to the right edge of the screen. Then, when the user continues to perform the right-slide gesture on the simulation touchpad, to drive the cursor to continue to slide rightward, as shown in FIG. 12B, the head unit device responds to a signal of continuing to slide rightward, to deform the cursor.
(3) When lasting duration of deformation of the cursor exceeds 3 seconds, as shown in FIG. 12C, a mirror interface of the front passenger screen is displayed on the central display screen.
(4) After screen mirroring is successful, the finger of the user may leave the simulation touchpad, and the cursor may be displayed at an original location, for example, displayed at the right edge of the screen, or may be displayed at a specified location of a mirror window, for example, displayed in the middle of the mirror window. If the cursor is displayed on the central display screen, the user may slide on the simulation touchpad to move the cursor to the mirror window, and further lock the cursor to the mirror window. As shown in FIG. 12C, the user slides on the simulation touchpad, to drive a cursor to move to a next song playing control, and taps the next song playing control in response to a tap operation of the user on the simulation touchpad. After receiving a tap signal, the head unit device generates a next song switching instruction, and sends the instruction to a music player. The music player switches from song 1 to song 2, and sends related information of song 2 to a processor of the front passenger screen. After calculation, the processor determines display data of the front passenger screen, and transmits the display data in two channels, where one channel is sent to the front passenger screen, and the other channel is sent to the central display screen, and is displayed in a window of the mirror interface, which may be specifically shown in FIG. 12D.

The foregoing describes in detail the methods in embodiments of this application. The following provides apparatuses in embodiments of this application.

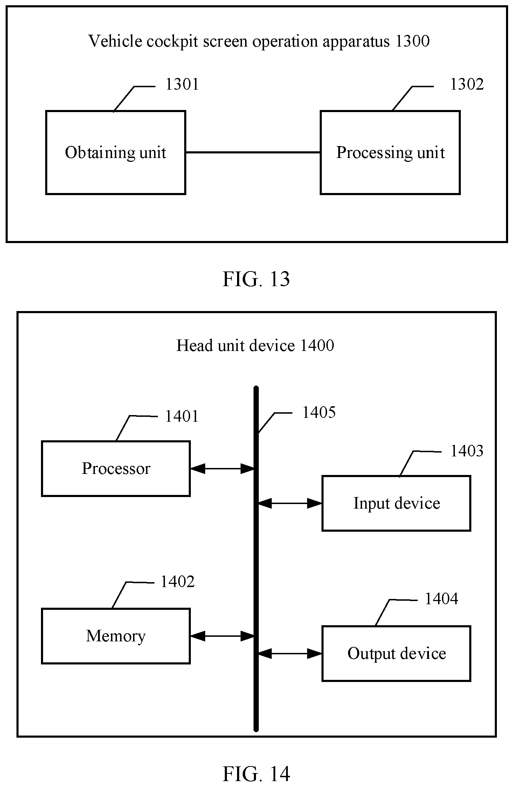

FIG. 13 is a diagram of a structure of a vehicle cockpit screen operation apparatus 1300 according to an embodiment of this application. The vehicle cockpit screen operation apparatus 1300 is used in the foregoing head unit device. As shown in FIG. 13, the apparatus includes an obtaining unit 1301 and a processing unit 1302.

The obtaining unit 1301 is configured to obtain attribute information of an operation on a first screen in a plurality of screens in a cockpit.

The processing unit 1302 is configured to determine a second screen from the plurality of screens based on the attribute information.

The processing unit 1302 is further configured to display a mirror interface of the second screen on the first screen.

It can be learned that, in the apparatus shown in FIG. 13, the head unit device may parse and identify the operation on the first screen to obtain the attribute information of the operation. For example, the attribute information may be a start location, a sliding direction, and the like of a cursor. Based on the attribute information, the head unit device may determine, from the plurality of screens, the second screen that a user needs to operate, and then display the mirror interface of the second screen on the first screen. In view of this, the head unit device may perform an operation related to the second screen through the mirror interface, for example, when the cursor is in the mirror interface, the head unit device may implement a corresponding function on the second screen based on a user operation. In this way, when different screens in the cockpit need to be operated, only mirrors of the different screens need to be switched, and the user does not need to change a location of the user, thereby improving convenience of an operation on a screen in the vehicle cockpit. In addition, there is no need to add physical hardware to implement operations on the different screens in the cockpit. This can reduce hardware costs.

In a possible implementation, the operation on the first screen includes a sliding gesture operation, the attribute information includes a start location, an end location, and a sliding direction of a sliding gesture, and in an aspect of determining the second screen from the plurality of screens based on the attribute information, the processing unit 1302 is specifically configured to:
determine the second screen from the plurality of screens based on at least two of the start location, the end location, and the sliding direction.

In a possible implementation, the operation on the first screen includes sliding of a cursor on the first screen, the attribute information includes an end location and a sliding direction of the cursor, and whether the cursor deforms, and in an aspect of determining the second screen from the plurality of screens based on the attribute information, the processing unit 1302 is specifically configured to:
determine the second screen from the plurality of screens based on at least two of the end location, the sliding direction, and whether the cursor deforms.

In a possible implementation, the obtaining unit 1301 is further configured to:
if the cursor is located in an area outside the mirror interface on the first screen, perform an operation related to the first screen;
if the cursor is located in the mirror interface, perform an operation related to the second screen; or
if the cursor is located on the second screen, perform an operation related to the second screen.

In a possible implementation, the processing unit 1302 is further configured to:
receive an operation signal sent by a mobile terminal, where the operation signal is generated based on an operation of a user on a simulation touchpad on the mobile terminal, and the simulation touchpad includes a part or all of a screen of the mobile terminal; and
control, based on the operation signal, the cursor to slide on the first screen.

In a possible implementation, in an aspect of performing the operation related to the first screen, the processing unit 1302 is specifically configured to:
take a screenshot of the first screen in response to a first preset gesture operation of the user on the simulation touchpad; and/or
adjust brightness of the first screen in response to a second preset gesture operation of the user on the simulation touchpad; and/or
display, in response to a third preset gesture operation of the user on the simulation touchpad, a first audio controller of a first speaker connected to the first screen, so that the user adjusts an audio attribute of the first speaker via the first audio controller.

In a possible implementation, in an aspect of performing the operation related to the second screen, the processing unit 1302 is specifically configured to:
take a screenshot of the second screen in response to a first preset gesture operation of the user on the simulation touchpad; and/or
adjust brightness of the second screen in response to a second preset gesture operation of the user on the simulation touchpad; and/or
display, in response to a third preset gesture operation of the user on the simulation touchpad, a second audio controller of a second speaker connected to the second screen, so that the user adjusts an audio attribute of the second speaker via the second audio controller.

In a possible implementation, the processing unit 1302 is further configured to:
lock the cursor in the mirror interface in response to sliding the cursor to the mirror interface.

In a possible implementation, in an aspect of determining the second screen from the plurality of screens based on at least two of the end location, the sliding direction, and whether the cursor deforms, the processing unit 1302 is specifically configured to:
obtain a pre-constructed spatial location graph of the plurality of screens, where the spatial location graph is used to represent a spatial location relationship between the plurality of screens; and
determine the second screen from the plurality of screens based on the spatial location relationship and at least two of the end location, the sliding direction, and whether the cursor deforms.

In a possible implementation, the attribute information further includes stay duration of the cursor at the end location and lasting duration of deformation of the cursor in a case in which the cursor deforms, and the processing unit 1302 is further configured to:
move the cursor from the first screen to the second screen when the stay duration is greater than or equal to preset stay duration and/or the lasting duration is greater than or equal to preset lasting duration.

According to an embodiment of this application, a part or all of the units of the vehicle cockpit screen operation apparatus 1300 shown in FIG. 13 may be combined into one or more other units, or one (or more) of the units may be divided into a plurality of smaller functional units. In this way, same operations can be implemented without affecting achievement of technical effects of embodiments of this application. The foregoing units are obtained through division based on logical functions. During actual application, a function of one unit may be implemented by a plurality of units, or functions of a plurality of units may be implemented by one unit. In another embodiment of this application, the vehicle cockpit screen operation apparatus 1300 may alternatively include another unit. During actual application, the functions may be implemented with assistance of the another unit, and may be implemented by a plurality of units in collaboration.

According to another embodiment of this application, by running a computer program (including program code) that can perform the steps in the corresponding method shown in FIG. 3 or FIG. 10 on a general-purpose computing device like a computer that includes processing elements and storage elements such as a central processing unit (Central Processing Unit, CPU), a random access storage medium (Random Access Memory, RAM), and a read-only memory medium (Read-Only Memory, ROM), the vehicle cockpit screen operation apparatus 1300 shown in FIG. 13 may be constructed, and the vehicle cockpit screen operation methods in embodiments of this application are implemented. The computer program may be recorded, for example, on a computer-readable recording medium, and is loaded into the foregoing computing device through the computer-readable recording medium, and runs therein.

Based on the descriptions of the foregoing method embodiments and apparatus embodiments, an embodiment of this application further provides a head unit device. FIG. 14 is a diagram of a structure of a head unit device according to an embodiment of this application. A head unit device 1400 includes at least a processor 1401, a memory 1402, an input device 1403, an output device 1404, and one or more programs. The one or more programs are stored in the memory 1402, and parts are connected to each other through a bus 1405 or in another manner. The input device 1403 and the output device 1404 may be a same device, and the input device 1403 may be configured to receive input from another device, and the output device 1404 may be configured to output information exchanged between the head unit device and another device and display information of each screen in the head unit device. The units shown in FIG. 13 and FIG. 13 may be implemented via the processor 1401, the memory 1402, the input device 1403, and the output device 1404.

The memory 1402 includes but is not limited to a RAM, a ROM, an erasable programmable read-only memory (erasable programmable read-only memory, EPROM), or a compact disc read-only memory (compact disc read-only memory, CD-ROM), and the memory 1402 is configured to store related computer programs and data.

The processor 1401 may be one or more CPUs. When the processor 1401 is one CPU, the CPU may be a single-core CPU, or may be a multi-core CPU.

The processor 1401 in the head unit device 1400 is configured to read the one or more programs stored in the memory 1402, to perform the following operations:
obtaining attribute information of an operation on a first screen in a plurality of screens in a cockpit;
determining a second screen from a plurality of screens based on the attribute information; and
displaying a mirror interface of the second screen on the first screen.

It can be learned that, in the head unit device 1400 shown in FIG. 14, the processor 1401 may parse and identify the operation on the first screen to obtain the attribute information of the operation. For example, the attribute information may be a start location, a sliding direction, and the like of a cursor. Based on the attribute information, the head unit device may determine, from the plurality of screens, the second screen that a user needs to operate, and then display the mirror interface of the second screen on the first screen. In view of this, the head unit device may perform an operation related to the second screen through the mirror interface, for example, when the cursor is in the mirror interface, the head unit device may implement a corresponding function on the second screen based on a user operation. In this way, when different screens in the cockpit need to be operated, only mirrors of the different screens need to be switched, and the user does not need to change a location of the user, thereby improving convenience of an operation on a screen in the vehicle cockpit. In addition, there is no need to add physical hardware to implement operations on the different screens in the cockpit. This can reduce hardware costs.

It should be noted that, for implementation of the operations, reference may also be correspondingly made to the corresponding descriptions in the method embodiment shown in FIG. 3.

It should be noted that, although only the processor 1401, the memory 1402, the input device 1403, the output device 1404, and the bus 1405 are shown in the head unit device 1400 shown in FIG. 14, in a specific implementation process, persons skilled in the art should understand that the head unit device 1400 further includes another component necessary for implementing normal running. In addition, based on a specific requirement, the persons skilled in the art should understand that the head unit device 1400 may further include a hardware component for implementing another additional function. Furthermore, the persons skilled in the art should understand that the head unit device 1400 may include only a component necessary for implementing embodiments of this application, and does not need to include all the components shown in FIG. 14.

An embodiment of this application further provides a computer-readable storage medium (Memory). The computer-readable storage medium is a memory device in the head unit device 1400, and is configured to store a computer program executed by the device. When the computer program is run on the head unit device 1400, the method procedure shown in FIG. 3 or FIG. 10 is implemented. It may be understood that the computer-readable storage medium herein may include a built-in storage medium in the head unit device 1400, and certainly may include an extended storage medium supported by the head unit device 1400. The computer-readable storage medium provides storage space, and the storage space stores an operating system of the head unit device 1400. In addition, the storage space further stores one or more computer programs that are suitable for being loaded and executed by the processor 1401. It should be noted that the computer-readable storage medium herein may be a high-speed RAM, or may be a nonvolatile memory (nonvolatile memory), for example, at least one magnetic disk memory. Optionally, the computer-readable storage medium may alternatively be at least one computer-readable storage medium located far away from the processor 1401.

An embodiment of this application further provides a computer program product. When the computer program product is run on a head unit device, the method procedure shown in FIG. 3 or FIG. 10 is implemented.

In the foregoing embodiments, the descriptions of each embodiment have respective focuses. For a part that is not described in detail in an embodiment, refer to the related descriptions in other embodiments.

It should be understood that the processor mentioned in embodiments of this application may be a CPU, or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor, or the like.

It may be understood that the memory mentioned in embodiments of this application may be a volatile memory or a nonvolatile memory, or may include a volatile memory and a nonvolatile memory. The nonvolatile memory may be a ROM, a programmable read-only memory (Programmable ROM, PROM), an EPROM, an electrically erasable programmable read-only memory (Electrically EPROM, EEPROM), or a flash memory. The volatile memory may be a RAM, and is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In the several embodiments provided in this application, it should be understood that the disclosed system, apparatus, and method may be implemented in other manners. For example, the described apparatus embodiments are merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate components may or may not be physically separate, and components displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit. When the foregoing integrated unit is implemented in the form of a software functional unit and sold or used as an independent product, the integrated unit may be stored in a computer-readable storage medium.

In this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. In the text descriptions of this application, the character "/" usually indicates an "or" relationship between the associated objects.

A sequence of the steps of the method in embodiments of this application may be adjusted, combined, or removed based on an actual requirement.

The modules in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A vehicle cockpit screen operation method, applied to a head unit device, wherein the method comprises:
obtaining attribute information of an operation on a first screen in a plurality of screens in a cockpit;
determining a second screen from the plurality of screens based on the attribute information; and
displaying a mirror interface of the second screen on the first screen.

2. The method according to claim 1, wherein the operation on the first screen comprises a sliding gesture operation, the attribute information comprises a start location, an end location, and a sliding direction of a sliding gesture, and the determining a second screen from the plurality of screens based on the attribute information comprises:
determining the second screen from the plurality of screens based on at least two of the start location, the end location, and the sliding direction.

3. The method according to claim 1, wherein the operation on the first screen comprises sliding of a cursor on the first screen, the attribute information comprises an end location and a sliding direction of the cursor, and whether the cursor deforms, and the determining a second screen from the plurality of screens based on the attribute information comprises:
determining the second screen from the plurality of screens based on at least two of the end location, the sliding direction, and whether the cursor deforms.

4. The method according to claim 3, wherein after the displaying a mirror interface of the second screen on the first screen, the method further comprises:
if the cursor is located in an area outside the mirror interface on the first screen, performing an operation related to the first screen;
if the cursor is located in the mirror interface, performing an operation related to the second screen; or
if the cursor is located on the second screen, performing an operation related to the second screen.

5. The method according to claim 3 or 4, wherein before the obtaining attribute information of an operation on a first screen in a plurality of screens in a cockpit, the method further comprises:
receiving an operation signal sent by a mobile terminal, wherein the operation signal is generated based on an operation of a user on a simulation touchpad on the mobile terminal, and the simulation touchpad comprises a part or all of a screen of the mobile terminal; and
controlling, based on the operation signal, the cursor to slide on the first screen.

6. The method according to claim 5, wherein the performing an operation related to the first screen comprises:
taking a screenshot of the first screen in response to a first preset gesture operation of the user on the simulation touchpad; and/or
adjusting brightness of the first screen in response to a second preset gesture operation of the user on the simulation touchpad; and/or
displaying, in response to a third preset gesture operation of the user on the simulation touchpad, a first audio controller of a first speaker connected to the first screen, so that the user adjusts an audio attribute of the first speaker via the first audio controller.

7. The method according to claim 5, wherein the performing an operation related to the second screen comprises:
taking a screenshot of the second screen in response to a first preset gesture operation of the user on the simulation touchpad; and/or
adjusting brightness of the second screen in response to a second preset gesture operation of the user on the simulation touchpad; and/or
displaying, in response to a third preset gesture operation of the user on the simulation touchpad, a second audio controller of a second speaker connected to the second screen, so that the user adjusts an audio attribute of the second speaker via the second audio controller.

8. The method according to claim 3, wherein after the displaying a mirror interface of the second screen on the first screen, the method further comprises:
locking the cursor in the mirror interface in response to sliding the cursor to the mirror interface.

9. The method according to any one of claims 3 to 7, wherein the determining the second screen from the plurality of screens based on at least two of the end location, the sliding direction, and whether the cursor deforms comprises:
obtaining a pre-constructed spatial location graph of the plurality of screens, wherein the spatial location graph is used to represent a spatial location relationship between the plurality of screens; and
determining the second screen from the plurality of screens based on the spatial location relationship and at least two of the end location, the sliding direction, and whether the cursor deforms.

10. The method according to claim 3, wherein the attribute information further comprises stay duration of the cursor at the end location and lasting duration of deformation of the cursor in a case in which the cursor deforms, and after the determining a second screen from the plurality of screens based on the attribute information, the method further comprises:
moving the cursor from the first screen to the second screen when the stay duration is greater than or equal to preset stay duration and/or the lasting duration is greater than or equal to preset lasting duration.

11. A vehicle cockpit screen operation apparatus, used in a head unit device, wherein the apparatus comprises an obtaining unit and a processing unit, wherein
the obtaining unit is configured to obtain attribute information of an operation on a first screen in a plurality of screens in a cockpit;
the processing unit is configured to determine a second screen from the plurality of screens based on the attribute information; and
the processing unit is further configured to display a mirror interface of the second screen on the first screen.

12. The apparatus according to claim 11, wherein the operation on the first screen comprises a sliding gesture operation, the attribute information comprises a start location, an end location, and a sliding direction of a sliding gesture, and in an aspect of determining the second screen from the plurality of screens based on the attribute information, the processing unit is specifically configured to:
determine the second screen from the plurality of screens based on at least two of the start location, the end location, and the sliding direction.

13. The apparatus according to claim 11, wherein the operation on the first screen comprises sliding of a cursor on the first screen, the attribute information comprises an end location and a sliding direction of the cursor, and whether the cursor deforms, and in an aspect of determining the second screen from the plurality of screens based on the attribute information, the processing unit is specifically configured to:
determine the second screen from the plurality of screens based on at least two of the end location, the sliding direction, and whether the cursor deforms.

14. The apparatus according to any one of claims 11 to 13, wherein the processing unit is further configured to:
if the cursor is located in an area outside the mirror interface on the first screen, perform an operation related to the first screen;
if the cursor is located in the mirror interface, perform an operation related to the second screen; or
if the cursor is located on the second screen, perform an operation related to the second screen.

15. The apparatus according to claim 13 or 14, wherein the processing unit is further configured to:
receive an operation signal sent by a mobile terminal, wherein the operation signal is generated based on an operation of a user on a simulation touchpad on the mobile terminal, and the simulation touchpad comprises a part or all of a screen of the mobile terminal; and
control, based on the operation signal, the cursor to slide on the first screen.

16. The apparatus according to claim 15, wherein in an aspect of performing the operation related to the first screen, the processing unit is specifically configured to:
take a screenshot of the first screen in response to a first preset gesture operation of the user on the simulation touchpad; and/or
adjust brightness of the first screen in response to a second preset gesture operation of the user on the simulation touchpad; and/or
display, in response to a third preset gesture operation of the user on the simulation touchpad, a first audio controller of a first speaker connected to the first screen, so that the user adjusts an audio attribute of the first speaker via the first audio controller.

17. The apparatus according to claim 15, wherein in an aspect of performing the operation related to the second screen, the processing unit is specifically configured to:
take a screenshot of the second screen in response to a first preset gesture operation of the user on the simulation touchpad; and/or
adjust brightness of the second screen in response to a second preset gesture operation of the user on the simulation touchpad; and/or
display, in response to a third preset gesture operation of the user on the simulation touchpad, a second audio controller of a second speaker connected to the second screen, so that the user adjusts an audio attribute of the second speaker via the second audio controller.

18. The apparatus according to claim 13, wherein the processing unit is further configured to:
lock the cursor in the mirror interface in response to sliding the cursor to the mirror interface.

19. The apparatus according to any one of claims 13 to 17, wherein in an aspect of determining the second screen from the plurality of screens based on at least two of the end location, the sliding direction, and whether the cursor deforms, the processing unit is specifically configured to:
obtain a pre-constructed spatial location graph of the plurality of screens, wherein the spatial location graph is used to represent a spatial location relationship between the plurality of screens; and
determine the second screen from the plurality of screens based on the spatial location relationship and at least two of the end location, the sliding direction, and whether the cursor deforms.

20. The apparatus according to claim 13, wherein the attribute information further comprises stay duration of the cursor at the end location and lasting duration of deformation of the cursor in a case in which the cursor deforms, and the processing unit is further configured to:
move the cursor from the first screen to the second screen when the stay duration is greater than or equal to preset stay duration and/or the lasting duration is greater than or equal to preset lasting duration.

21. A head unit device, comprising a processor, a memory, and one or more programs, wherein the processor is connected to the memory, the one or more programs are stored in the memory, and when the one or more programs are configured to be executed by the processor, the method according to any one of claims 1 to 10 is implemented.

22. A computer-readable storage medium, wherein the computer-readable storage medium stores a computer program for execution by a device, and when the computer program is executed, the method according to any one of claims 1 to 10 is implemented.

23. A computer program product, wherein when the computer program product is run on an electronic device, the electronic device is enabled to perform the method according to any one of claims 1 to 10.
